# EUROPEAN PATENT APPLICATION

(11) **EP 0 886 077 A2**
(43) Date of publication of application: **23.12.1998**
(21) Application number: 98110556.2
(22) Date of filing: 09.06.1998
(51) Int. Cl.: F16D 65/22, F16D 65/24

(54) **Brake shoe operating device**

(30) Priority: 10.06.1997 JP 168182/97
(71) Applicant: Nisshinbo Industries, Inc., Chuo-ku, Tokyo 103-0013 (JP)
(72) Inventor: Michinori, Takashima, Nisshinbo Ind. Inc. Nagoya, Nagoya-shi, Aichi 457-0841 (JP)
(74) Representative: Sajda, Wolf E., Dipl.-Phys.

(57) **Abstract**

A brake shoe operating device is disclosed wherein smoothly strokeable fitting parts are formed between an intermediate piston (17) and an outer piston (16) at one side. In the device, the outer piston (16) at one side and the intermediate piston (17) are supported by each other by means of the fitting parts. The dimension ratio (L/D) of the fitting length (L) of the fitting part to the fitting diameter (D) of the fitting part is set to be 0.5 or more.

## Description

The invention relates to a brake shoe operating device designed for a drum brake device, in particular for a heavy duty vehicle.

A typical brake shoe operating device in combination with a fluid type service brake and a mechanical type parking brake is disclosed, for example, in Japanese utility model publication No. 56-44909.

This type of conventional operating device comprises the following components: three pistons, namely one intermediate piston and a pair of outer pistons, which are arranged in series; a fluid pressure chamber located between the intermediate piston and the outer piston at one side; and a wedge mechanism located between the intermediate piston and the outer piston at the other side. When the service brake is in operation, the fluid pressure in the fluid pressure chamber located between the outer piston at one side and the intermediate piston is increased, and therefore the outer piston at one side can be pushed outwards and the outer piston at the other side can also be pushed outwards through the intermediate piston. Accordingly, a pair of brake shoes engaging with the respective outer pistons spreads open to operate the brake drums affixed on a corresponding wheel of a vehicle in order to control the speed of the vehicle or to keep the vehicle stopping.

When the parking brake is in operation, the outer piston at the other side and the intermediate piston are pushed outwards due to the wedge effect exerted by the wedge mechanism in accordance with a sliding movement of the wedge mechanism. Hence, the outer piston at one side is pushed outwards with the intermediate piston. Accordingly, the two outer pistons spread a pair of brake shoes open. Thus, the brake drums are maintained in a condition of being stopped.

In the conventional brake shoe operating device described above, the movement of the brake shoes causes a large amplified force by leverage on both of the outer pistons when the service brake and/or the parking brake is in operation. Moreover, when the parking brake is in operation, the wedge mechanism also causes a large amplified force by leverage on the intermediate pistion thereby forcing the piston to stroke with an inclination.

In order to reduce the influence of the amplified force by leverage, the fitted length of the contacting surfaces between a protuberance and a bottom hole at a fitting part of the respective pistion fitting inside the cylinder may be extended. However, the length of the cylinder, in other words the length of the respective piston, may not be extended to the extent that the extension effectively removes the influence of an amplified force by leverage, since the drum diameter, for example, is limited.

Hence, in a conventional operating device of the type described above, the short length of contact of the piston with the cylinder causes a high influence of a large amplified force by leverage thereby causing wear and settling on the abutting point between the cylinder and the respective piston end. Accordingly, this situation causes a bad returning of the piston leading to a dragging of the brake shoes and fluid leakage.

Accordingly, the object underlying the present invention is to provide a brake shoe operating device which has a great durability in consideration of the amplified force by leverage on the piston and eliminates or at least reduces the chance of causing a bad returning of the piston or fluid leakage.

According to the invention, this object is solved in an advantageous manner. According to a main aspect of the present invention, a brake shoe operating device is disclosed which comprises three smoothly strokeable pistons arranged in series in a cylinder, a fluid chamber formed between an intermediate piston and an outer piston at one side, and a mechanical type wedge mechanism placed between the intermediate piston and an outer piston at the other side. The wedge mechanism is swingable in the direction of the cylinder axis, wherein a smoothly strokeable fitting part is located between the intermediate piston and the outer piston at one side. The outer piston at one side and the intermediate piston support each other by the fitting part, and a dimension ratio of the fitted length of the contacting surface between a protuberance and a bottom hole at the fitting part to the fitted diameter of the fitting part is set to be 0.5 or more.

According to a further development of the present invention, the clearance between the external diameter of the fitting part of the intermediate piston and the internal diameter of the fitting part of the outer piston at one side is designed so that the fitting part of the intermediate piston and the outer piston at one side abut against each other to support each other when the intermediate piston and the outer piston at one side in the cylinder stroke with an inclination.

In a specific embodiment of the device according to the invention, the fitting part comprises a protuberance with a small diameter formed at one side of the intermediate piston facing the outher piston at one side, and a bottom hole formed at the outer piston at one side.

In another specific embodiment according to the invention, the fitting part comprises a bottom hole formed at one side of the intermediate pistion facing the outer piston at one side, and a protuberance with a small diameter formed at the outer piston at one side.

Further details of the invention will be readily apparent from the detailed explanation of preferred embodiments with reference to the accompanying drawings.
- Fig. 1: is a cross-section view of a brake shoe operating device according to a first embodiment of the present invention.
- Fig. 2: is an explanatory view of an operation model when the service brake is applied.
- Fig. 3: is an explanatory view of the test result of a sliding resistance based upon the structural durability bench test procedure.
- Fig. 4: is a partial cross-section view of a second embodiment of the invention showing the fitting part between the intermediate piston and the outer piston at one side.
- Fig. 5: is a partial cross-section of a third embodiment of the invention disclosing a modification of the brake shoe operating device.

### Embodiment 1

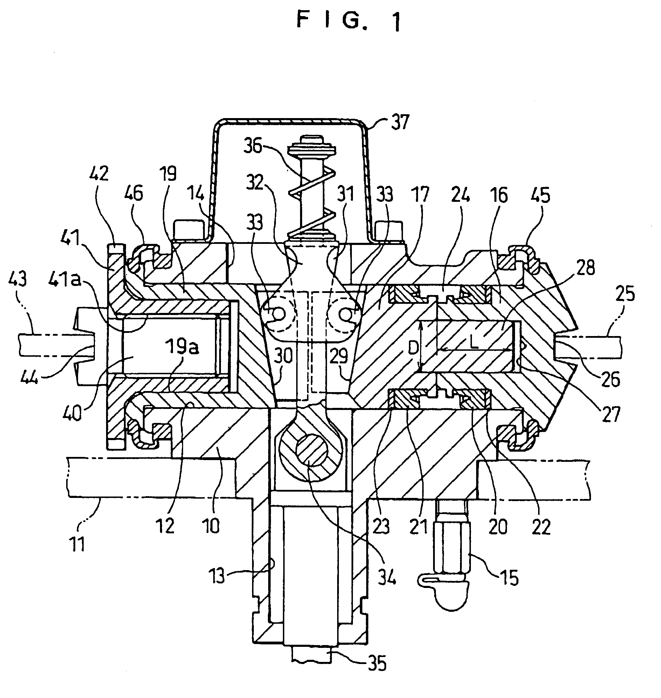

Fig. 1 is a cross-section view of a brake shoe operating device, wherein a cylinder body 10 is fixed at a back plate 11 which is affixed at a stationary portion of a vehicle by bolts, rivets and the like.

The cylinder body 10 comprises a cylinder 12 which supports a plurality of pistons 16, 17 and 19 smoothly strokeable in the direction of the cylinder axis. Furthermore, holes or openings 13 and 14 are provided in the cylinder body 10 inside which a wedge mechanism is mounted which crosses with the cylinder axis. Also, the cylinder body 10 is provided with an air bleeder 15.

In the arrangement according to Fig. 1, an outer piston 16, an intermediate piston 17 and a further outer piston 19 are arranged in series when looking from right to left.

A pair of piston cups 20 and 21 and a pair of backup rings 22 and 23 are provided in a peripheral recess or ditch of the outer piston 16 at the one side and the intermediate piston 17, thereby maintaining a fluid-sealing of a fluid chamber 24 formed between the pistons 16 and 17 on the one hand and the cylinder 12 on the other hand.

A notched groove 26 which receives the web of a brake shoe 25 at the one side is formed at one end of the outer piston 16, and a bottom hole 27 is formed facing the intermediate piston 17 located at the other end of the outer piston 16.

A protuberance 28 with a small diameter is formed at one side of the intermediate pistion 17 facing the outer piston 16 at one side. The protuberance 28 smoothly strokeably fits into the above-mentioned bottom hole 27, and the intermediate piston 17 and the outer piston 16 at one side to support each other at the fitting part.

The purpose of fitting between the outer piston 16 at one side and the intermediate piston 17 is to reduce any inclinations between both of the pistons 16 and 17.

The dimension ratio of the fitting length L of the fitting part to the fitting diameter D of the fitting part, i.e. the ratio L/D is preferably set to be 0.5 or more. This measure is taken to maintain a lower stroke resistance of the returning stroke of the outer piston 16 at one side and the intermediate pistion 17.

Setting the dimension ratio L/D to a value lower than 0.5 increases the wear and settling thereby enlarging the stroke resistance of the returning stroke of the two pistons 16, 17 and resulting in dragging of the brake shoes and fluid leakage because of a bad returning stroke of the pistons 16 and 17.

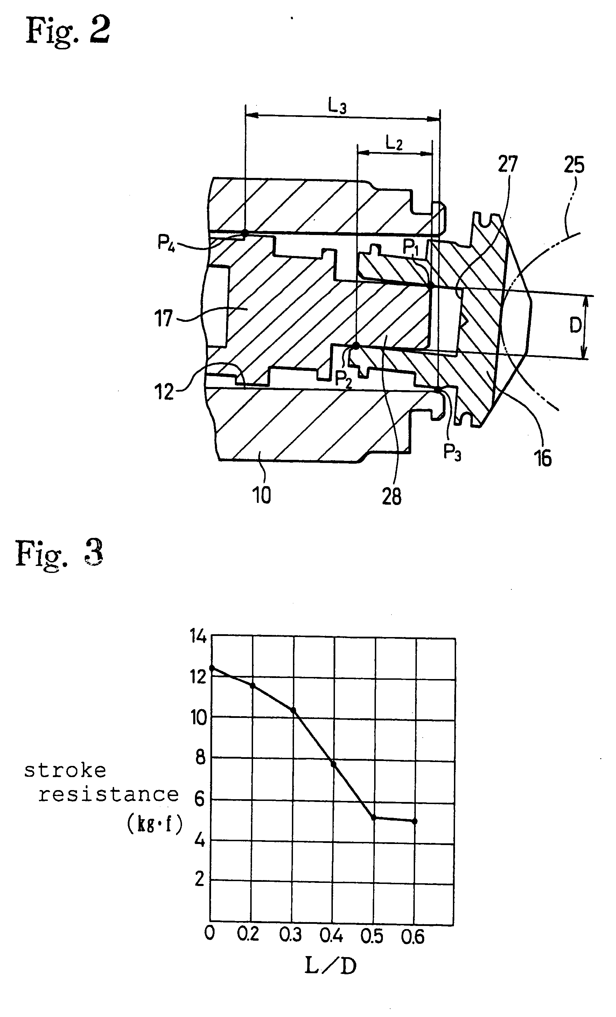

When the outer piston 16 at one side and the intermediate piston 17 stroke with an inclination, a clearance between the cylinder 12 and both of the pistons 16 and 17 is preferably so designed that the fitting parts, i.e. the abutting points P1 and P2 between the protuberance 28 with a small diameter and the bottom hole 27 of both pistons 16 and 17 would make an initial contact. This situation is shown in detail in Fig. 2 of the drawings.

A pair of ditches with inclined walls 29 and 30 is provided on the respective opposite surfaces of the intermediate piston 17 and the outer piston 19 at the other side.

A roller gauge 32 is fitting around a wedge body 31, and rollers 33 provided at the roller gauge 32 abut against the bottom of the ditches with the inclined walls 29 and 30. A base end of the wedge body 31 is connected to a rod 35 through a pin 34 and it is swingable in the direction of the axis of the cylinder 12, while the other end of the rod 35 is connected to an air chamber of a usual type (not shown in the diagram).

When a parking brake is in operation and working on the device according to Fig. 1, the distance between the intermediate piston 17 and the outer piston 19 at the other side can mechanically be extended by the sliding action of the wedge body 31 through the rod 35 rolling the rollers 33 on the ditches with the inclined walls 29 and 30.

A return spring 36 returns the rollers 33 to their initial position in consideration of the position of the wedge body 31 when the brake is released. A cover 37 covers the hole 14 provided on the top side of the arrangement according to Fig. 1.

An adjustment nut 41 is inserted into a hole 19a formed at the axis of the outer piston 19 at the other side, and an adjustment bolt 40 is screwed into a tapped hole 41a formed at the axis of an adjustment nut 41. An adjustment tooth 42 is formed at the outer surface of the flange of the adjustment nut 41.

Also, a notched groove 44 to receive the web of a brake shoe 43 at the other side is proved at the top of the adjustment bolt 40.

The adjustment tooth 42 can be rotated by using an equipment such as a screwdriver etc. or an adjustment lever not shown in the diagram to adjust the length of engagement of the adjustment bolt 40 in consideration of the outer piston 19 at the other side (the adjustment nut 41).

Moreover, dust boots 45 and 46 are provided between the respective top sides of the outer pistons 16 and 19 on the one hand and the cylinder body 10 on the other hand.

### Operation of a Service Brake

In the following, the operation of a service brake will be explained with reference to Fig. 1 of the drawings. When pressurizing the fluid chamber 24, the outer piston 16 at one side directly presses on the web of the brake shoe 25 at one side, and the intermediate piston 17 presses on the web of the brake shoe 43 at the other side through the wedge mechanism, the outer piston 19 at the other side and the adjustment bolt 40. Accordingly, both of the brake shoes 25 and 43 may frictionally engage with a brake drum (not shown in the drawings) to operate as a service brake.

At this time, the rollers 33 and the roller gauge 32 move upwards in the arrangement according to Fig. 1 against the force of the return spring 36, and the wedge body 31 only makes a corresponding movement with the pistons 17 and 19 while swinging with the pin 34 as a fulcrum.

In the following, reference is made to Fig. 2 of the drawings. Fig. 2 is used here to explain the situation when an amplified force by leverage is applied on the outer piston 16 at one side and the intermediate piston 17 through one side of the brake shoe 25. For reasons on convenience, details of the piston cups, dust boots etc. are omitted in Fig. 2 with respect to facilitate the explanation of the operation model when the service brake is in operation.

Prior to the abutment of the end portions of the peripherally strokeable fitting surfaces of the outer piston 16 at one side and the intermediate piston 17 against the cylinder 12, the fitting parts, namely the abutting points P1 and P2 of the protuberance 28 with a small diameter and the bottom hole 27, of both pistons 16 and 17 are attached to be integrated. Furthermore, even if the end portions of the peripherally strokeable fitting surfaces of both pistons 16 and 17 abut against the cylinder 12, the fitting length L3 of the fitting part, in other words the length of contact with the cylinder 12, is maintained in its extent from the abutting point P3 of the outer piston 16 at one side to the abutting point P4 of the intermediate piston 17. Accordingly, the inclinations of both pistons 16 and 17 can be minimized and therefore the above-mentioned fitting length L3 of the fitting part may be reduced.

It goes without saying that in Fig. 2 the clearance at the respective fitting parts is shown in an enlarged manner to facilitate the understanding of the present invention.

Therefore, the outer piston 19 at the other side also maintains a proper fitting length from the cylinder 12, and accordingly the inclination is also minimized.

When releasing the pressure of the fluid chamber 24, both outer pistons 16 and 19, the intermediate piston 17 etc. are returned to their starting positions due to the force exerted by a shoe return spring, not shown in the drawings.

### Operation of a Parking Brake

When releasing compressed air of a corresponding air chamber, not shown in the drawings, the rod 35 is pulled by the force of the spring within the air chamber. Due to the pulling force of the rod 35, the wedge body 31 moves downward in the arrangement according to Fig. 1 together with the rod 35, and the roller 33 at the right side presses on the web of the brake shoe 25 at one side through the intermediate piston 17 and the outer piston 16 at one side.

Also, the roller 33 at the left side presses on the web of the brake shoe 43 at the other side through the outer piston 19 at the other side and the adjustment bolt 40, and then both brake shoes 25 and 43 are frictionally engaged with a corresponding brake drum (not shown in the drawings) thereby exerting the function of a parking brake.

At this time, the intermediate piston 17 and the outer piston 19 at the other side receive the operation force of the rollers 33 by the ditches with the inclined walls 29 and 30, and an amplified force by leverage because of the operation force applied vertically toward the bottom of the ditches with the inclined walls 29 and 30. However, as in the service brake operation, the inclination of both pistons 17 and 19 would be maintained low.

### Comparison with Structural Durability Bench Test

In order to investigate the characteristics of the invention described above, a test was conducted in comparison with a conventional type of device having no fitting part between the outer piston 16 at one side and the intermediate piston 17 based on the test procedure C441-77 (service brake structural durability bench test procedure) of the Japan Automobile Standards Organization (JASO) with the conditions specified below. Furthermore, the parking brake operation was added in this experiment.

### Test Conditions

| | |
|---|---|
| Braking torque: | 1400 kgf · m |
| Number of braking operations when service brake is in operation: | 200,000 times |
| Number of braking operations when parking brake is in operation: | 40,000 times (applied once at every five service braking operations) |
| Drum diameter: | 410 mm |
| Cylinder diameter: | 58.74 mm |

### Test Results

In a system without a fitting part between the intermediate piston 17 and the outer piston 16 at one side, the brake fluid oozed out from the dust boot 45. Then, the stroke resistance toward the returning direction of the intermediate piston 17 and the outer piston 16 at one side doubled from about an initial value of 5.4 kgf to a value of 12.2 kgf.

This test result relates to a prior-art device mentioned above.

The next test was conducted under the condition that a fitting part was provided between the intermediate piston 17 and the outer piston 16 at one side. Then, the dimension ratio L/D of the fitted length L of the fitting part to the fitted diameter D of the fitting part is set to five values of L/D, i.e. 0.2, 0.3, 0.4, 0.5, and 0.6.

For those samples, where the dimension ratio L/D is set to be 0.2 to 0.4, a small amount of the brake fluid is strained inside dust boots 45. However, the stroke resistance toward the returning direction of the intermediate piston 17 and the outer piston 16 at one side became greater than the initial value of about 5.4 kgf as shown in Fig. 3.

For those samples where L/D is set to be 0.5 and 0.6, respectively, no leakage of the brake fluid was observed, and the stroke resistance toward the returning direction of the intermediate piston 17 and the outer piston 16 at one side maintained a value about the initial value of about 5.4 kgf as shown in Fig. 3 of the drawings.

### Embodiment 2

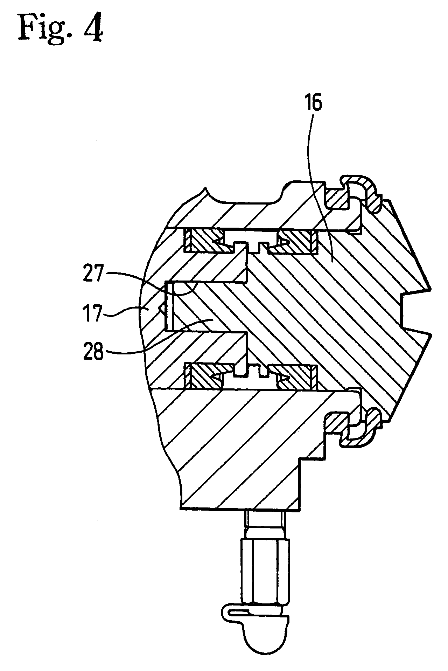

In the following, a second embodiment is described in connection with Fig. 4 of the drawings. In Fig. 1, the bottom hole 27 is formed at the outer piston 16 at one side, while the protuberance 28 with a small diameter is formed at the intermediate piston 17. However, as shown in Fig. 4, the bottom hole 27 may also be formed at the intermediate piston 17, whereas the protuberance 28 with a small diameter may be formed at the outer piston 16 at one side. Then, the parts with the bottom hole 27 and the protuberance 28 with a small diameter may be set at opposite locations when compared with Embodiment 1.

### Embodiment 3

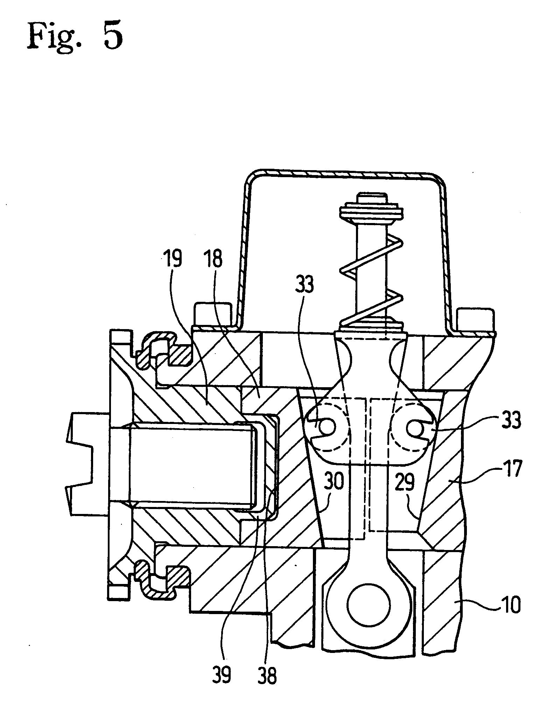

A third embodiment will be described in connection with Fig. 5 of the drawings. In the embodiment of Fig. 5, for the convenience of manufacturing, a tappet 18 may be used for the right half portion of the outer piston 19 at the other side, and the ditch with the inclined wall 30 is formed at the right end of the tappet 18, in other words the surface facing the intermediate piston 17.

A convex part 39 and a concave part 38 are formed at the left end (the surface facing the other side of the outer piston 19) of the tappet 18 and the surface facing the outer piston 19 at the other side, and the convex part 39 and the concave part 38 are fitted to each other to be integrated.

Then, the tappet 18 and the outer piston 19 at the other side stroke together when the service brake or the parking brake is in operation. Also, the rollers 33 as components of the wedge mechanism roll on the bottom surfaces of the ditches with the inclined walls 29 and 30 of the intermediate piston 17 and the tappet 18.

This modified construction according to Embodiment 3 facilitates the manufacturing of the entire device by improving the manufactureability of the ditch with the inclined wall 30 by forming the ditch with the inclined wall 30 on the independent tappet 18 instead of the outer piston 19 at the other side.

### Technical Effects

With the embodiments of the present invention, various advantages can be achieved in practice as set forth below.
a) When the intermediate piston 17 and the outer piston 16 at one side stroke with an inclination, the device according to the invention maintains the proper fitting length L of the fitting part to the cylinder 12 thereby reducing any inclination of the piston components.
   Accordingly, even when repeating the service brake operation or the parking brake operation, the device according to the invention eliminates the possibility of causing a dragging of the brake shoe or fluid leakage because of a bad returning of the piston due to wear, settling etc.. Hence, the invention provides a brake shoe operating device which has a good durability in its effective braking operation.
b) In particular, the stroke resistance toward the returning direction may be maintained at low values since the dimension ratio L/D of the fitting length L of the fitting parts between the outer piston 16 at the one side and the intermediate piston 17 to the fitting diameter D of the fitting part is set to be 0.5 or more.
c) The intermediate piston 17 and the outer piston 16 at one side are integrated to stroke with an inclination. Therefore, the fitting length to the cylinder 12 may be reduced, thereby maintaining the proper fitting length of the outer piston 19 at the other side to the cylinder 12. Accordingly, the device according to the invention may easily be applied to brakes of smaller sizes.

## Claims

1. A brake shoe operating device, comprising
- three smoothly strokeable pistons (16, 17, 19) arranged in series in a cylinder (12),
- a fluid chamber (24) formed between an intermediate piston (17) and an outer piston (16) at one side of the three pistons (16, 17, 19), and
- a mechanical type wedge mechanism (31, 32, 33) placed between the intermediate piston (17) and an outer piston (19) at the other side, wherein the wedge mechanism (31, 32, 33) is swingable in the direction of the cylinder axis,
wherein a smoothly strokeable fitting part (27, 28) is located between the intermediate piston (17) and the outer piston (16) at one side,
wherein the outer piston (16) at one side and the intermediate piston (17) support each other by means of the fitting part (27, 28),
and wherein the dimension ratio (L/D) of a fitted length (L) of the contacting surface between a protuberance (28) and a bottom hole (27) at the fitting part to a fitted diameter (D) of the fitting part (27, 28) is set to be 0.5 or more.

2. The device according to claim 1,
wherein a clearance between the external diameter of the fitting part (28) of the intermediate piston (17) and the internal diameter of the fitting part (27) of the outer piston (16) at one side is designed so that the fitting part (28) of the intermediate piston (17) and the outer piston (16) at one side abut against each other to support each other when the intermediate piston (17) and the outer piston (16) at one side in the cylinder (12) stroke with an inclination.

3. The device according to claim 1 or 2,
wherein the fitting part (27, 28) comprises
- a protuberance (28) with a small diameter formed at one side of the intermediate piston (17) facing the outer piston (16) at one side, and
- a bottom hole (27) formed at the outer piston (16) at one side.

4. The device according to claim 1 or 2,
wherein the fitting part (27, 28) comprises
- a bottom hole (27) formed at one side of the intermediate piston (17) facing the outer piston (16) at one side, and
- a protuberance (28) with a small diameter formed at the outer piston (16) at one side.
